# EUROPÄISCHE PATENTSCHRIFT

(11) **EP 1 357 306 B1**
(45) Veröffentlichungstag und Bekanntmachung des Hinweises auf die Patenterteilung: **13.12.2006**
(21) Anmeldenummer: 03008695.3
(22) Anmeldetag: 16.04.2003
(51) Int. Cl.: F16C 11/06

(54) **Verfahren zur Herstellung eines Kugelzapfens**
Method of manufacturing a spherical gudgeon
Procédé de fabrication d'un pivot sphérique avec rotule

(30) Priorität: 17.04.2002 DE 10217149
(43) Veröffentlichungstag der Anmeldung: 29.10.2003
(73) Patentinhaber: ZF Lemförder Metallwaren AG, 49448 Lemförde (DE)
(72) Erfinder: Wolf, Georg, 49080 Osnabrück (DE); Budde, Frank, 49401 Damme (DE)

(56) Entgegenhaltungen:
- DE-A- 19 843 126
- DE-A- 19 921 107
- FR-A- 1 226 195
- US-A- 2 970 853
- US-A- 3 025 090
- US-A- 3 941 495
- US-A- 4 522 397
- US-A- 5 784 951

## Beschreibung

Die vorliegende Erfindung betrifft ein Verfahren zur Herstellung eines Kugelzapfens dessen Gelenkzapfen aus einem metallischem Material und dessen Gelenkkugel ein angeformtes Kunststoffspritzteil ist, siehe z.B. DE-A-19 921 107.

Aufgabe der vorliegenden Erfindung ist es, einen Kugelzapfen bereit zu stellen, der kostengünstig und einfach in der Herstellung ist.

Diese Aufgabe wird erfinderisch mit einem Verfahren mit den Merkmalen des Anspruches 1 gelöst.
Weitere vorteilhafte Ausgestaltungen des Kugelzapfens ergeben sich durch die Unteransprüche.

Damit beim Einsatz von faserverstärkten Kunststoffen bedingt durch deren Schwindungsverhalten der Kugelzapfen keinen Verzug beziehungsweise keine Einfallstellen bekommt, ist es erfindungsgemäß vorgesehen, dass die Kunststoffschmelze mit einem Gas beziehungsweise Treibmittel, welches chemisch oder physikalisch mit der Schmelze verbunden beziehungsweise darin gelöst ist, versetzt wird. Beim Einspritzvorgang tritt das Gas durch den geringeren Druck im Werkzeug in dieses aus und sorgt für einen gleichmäßigen Nachdruck, so dass besagte Einfallstellen oder ein Verzug vermieden werden können. Der zusätzliche Nachdruck, welcher in der Regel von der Schnecke der Spritzgußmaschine aufgebracht wird, muß nicht mehr aufgebracht werden. Hierdurch läßt sich die Zykluszeit im Vergleich zu herkömmlichen Spritzgußverfahren erheblich verkürzen.

Durch den Ausgleich des Verzugs durch das Gas beziehungsweise Treibmittel, ist es möglich, jede Art von Thermoplast mit und ohne Verstärkung, zum Beispiel Faserverstärkung, einzusetzen, wobei sich eine hohe Oberflächenqualität realisieren läßt. Als Werkstoffe könne alle thermoplastischen Kunststoffe, wie zum Beispiel Polyamid (PA), Polyoxymethylen (POM), Polyetheretherketon (PEEK) oder auch Duroplaste wie zum Beispiel Epoxidharz (EP) oder ungesättigte Polyesther (UP) verwendet werden.

Durch entsprechende Wahl des Kunststoffs kann die Eigenschaft der Gelenkkugel beeinflußt werden. Durch Abflachungen des Kugelkopfes zum Beispiel durch Pressen im Äquatorbereich oder an der Stirnseite des Kugelkopfes, ist es möglich die Reibmomente zu verringern und den Anspritzpunkt so zu platzieren, dass er nicht mit der Gelenkpfanne in Berührung kommt.

Bei der Herstellung des Kugelkopfes kann es zu einer Gratbildung durch die aneinandergrenzenden Spritzgußwerkzeuge kommen. Das Spritzgußwerkzeug ist dabei vorteilhaft derart auszugestalten, dass der mögliche Grat sich beispielsweise in Bereichen befindet, wo er die Beweglichkeit der Gelenkkugel nicht beeinträchtigt, sodass er zum Beispiel in den Abschnitten der Gelenkkugel vorgesehen werden kann, die eine Abflachung aufweisen. In diesem Bereich ist ein Grat nicht störend, da er nicht mit der Gelenkpfanne in Berührung kommt. Es muß daher auch nicht in einem separaten Arbeitsschritt entfernt werden, wodurch die Fertigung sich insgesamt vereinfacht.

Durch das Anspritzverfahren kann der Kugelzapfen wesentlich günstiger auch in Großserie hergestellt werden.

Durch den Einsatz von hochfesten Kunststoffen, wie zum Beispiel faserverstärktem Kunststoff, können große Kräfte von dem Kugelgelenk übertragen werden. Vorteilhaft ist ferner, dass die Gelenkpfannen aus Metall gefertigt sein können und keine eingelegte Kunststoffpfanne mehr benötigen, wodurch das Kugelgelenk selbst einfacher in seinem Aufbau und daher auch preisgünstiger herstellbar ist.

Damit eine dauerhafte formschlüssige Verbindung zwischen dem Zapfen und der angespritzten Gelenkkugel entsteht, weist der Zapfen im zu umspritzenden Bereich vorteilhaft Vorsprünge, insbesondere Rücksprünge in Form von zum Beispiel Kragen auf. Er kann jedoch auch einen verdickten Bereich, zum Beispiel in Form eines Zylinders oder einer Kugel aufweisen. Hierdurch ist gewährleistet, dass der aufgespritzte Kunststoff sich durch mechanische oder thermische Kräfte nicht ungewollt vom Zapfen löst. Es ist dabei darauf zu achten, dass der Zapfen eine einfache geometrische Form aufweist, welche leicht und kostengünstig herstellbar ist.

In einer weiteren möglichen vorteilhaften Ausgestaltung des erfindungsgemäßen Kugelzapfens kommt zu dessen Herstellung ein Mehrkomponentenspritzgußverfahren zum Einsatz. Als mögliches Verfahren soll hier nur das Sandwichverfahren genannt werden, wo zwei oder mehr Schmelzen nacheinander in die Kavität gespritzt werden. Dabei wird die Kavität mit der einen ersten Schmelze nur zum Teil gefüllt und anschließend mit einer zweiten oder weiteren, nachgeschobenen Schmelze komplett gefüllt. Die erste Schmelze könnte dabei eine geschlossene Außenhaut bilden, die zum Beispiel ohne Fasern und/oder Poren ausgebildet ist, um insbesondere die tribologischen Eigenschaften zu realisieren. Die zweite Schmelze könnte gefüllt sein mit Fasern. Hierdurch wird vorteilhaft eine hohe Festigkeit erzielt. Das physikalisch oder chemische Treibmittel in der Schmelze gleicht dabei die auftretenden Schwindungsunterschiede aus, so dass eine optimale Kontur erreicht wird. Es ist selbstverständlich, dass auch andere gleichwertige Verfahren zum Einsatz gelangen können. Als Materialkombinationen sind vorteilhaft Thermoplaste zu wählen, die aneinander haften oder aber auch Thermoplaste mit unterschiedlichen Füllgehalten, wobei der zweite Thermoplast zum Beispiel mit einem Treibmittel zum Ausgleich des Verzugs und der Einfallstellen versehen sein kann.

Alle bereits erläuterten Ausführungsformen können noch dadurch ergänzt werden, in dem eine Halte- oder Aufnahmevorrichtung für einen Dichtungsbalg mit an die Gelenkkugel beziehungsweise auf den Zapfen aufgespritzt wird. Hierdurch wird im Gegensatz zu herkömmlichen Verfahren, bei denen durch zusätzliches Pressen oder ähnliche Verfahren eine entsprechende Aufnahme für einen Dichtungsbalg in den Zapfen eingearbeitet wird, das Herstellungsverfahren wesentlich vereinfacht. Der aufgespritzte Kunststoff bildet ferner einen guten Korrosionsschutz für den Zapfen, so dass eine Korrosionsbeschichtung in dem bespritzten Bereich entfallen kann.

Nachfolgend werden an Hand von Zeichnungen mögliche Ausgestaltungen von erfindungsgemäßen Kugelzapfen näher erläutert.

Es zeigen:
- Fig. 1:: Ein erstes Ausführungsbeispiel eines erfindungsgemäß hergestellten Kugelzapfens mit angeformter Halterung für einen Dichtungsbalg;
- Fig. 2:: ein zweites Ausführungsbeispiel eines erfindungsgemäß hergestellten Kugelzapfens;
- Fig. 3:: ein drittes Ausführungsbeispiel eines erfindungsgemäß hergestellten Kugelzapfens mit Gelenkkugel aus einem zweischichtigem Material;
- Fig. 4:: ein viertes Ausführungsbeispiel eines erfindungsgemäß hergestellten Kugelzapfens mit Gelenkkugel aus einem zweischichtigem Material, mit speziell geformtem Zapfen;
- Fig. 5:: ein fünftes Ausführungsbeispiel eines erfindungsgemäß hergestellten Kugelzapfens ohne angeformte Halterung für Dichtungsbalg.
- Fig. 6:: ein sechstes Ausführungsbeispiel eines erfindungsgemäß hergestellten Kugelzapfens mit gepreßtem Zapfen.

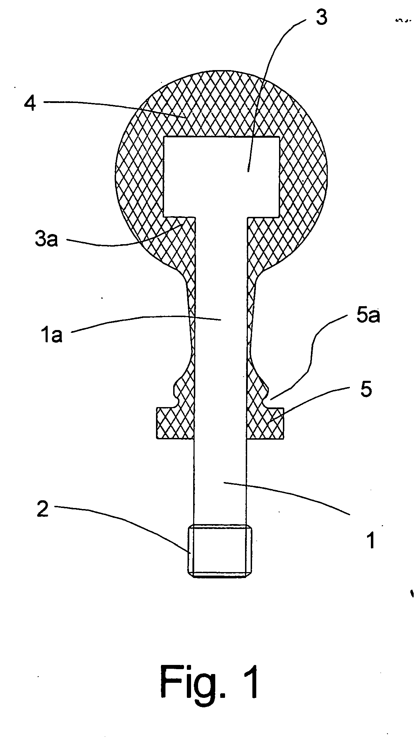

Die Figur 1 zeigt einen Kugelzapfen für ein Kugelgelenk, bestehend aus einem Zapfen 1, an dem eine Gelenkkugel 4 aus Kunststoff angespritzt ist. Der Zapfen 1 weist an seinem einen freien Ende ein Gewinde 2 zur späteren Befestigung des Zapfens 1 auf. An seinem anderen Ende weist der Zapfen 1 einen verbreiterten Bereich 3 auf, welcher vom Kunststoffmaterial der Gelenkkugel 4 vollständig umspritzt ist. Der verbreiterte Bereich 3 bildet eine Hinterschneidung 3a, welche zusammen mit der Stirnseite des Bereichs 3 für einen formschlüssigen Halt der Gelenkkugel 4 sorgt. An die Gelenkkugel 4 ist eine Halterung 5 unmittelbar angeformt, welche den Bereich 1a des Zapfens 1 abdichtend umschließt und somit diesen Bereich vor Korrosion schützt. Die Halterung 5 weist in radialer Richtung einen umlaufenden Rücksprung 5a auf, in dem ein nicht dargestellter Dichtungsbalg zur Abdichtung des Kugelgelenks sicher befestigt werden kann.

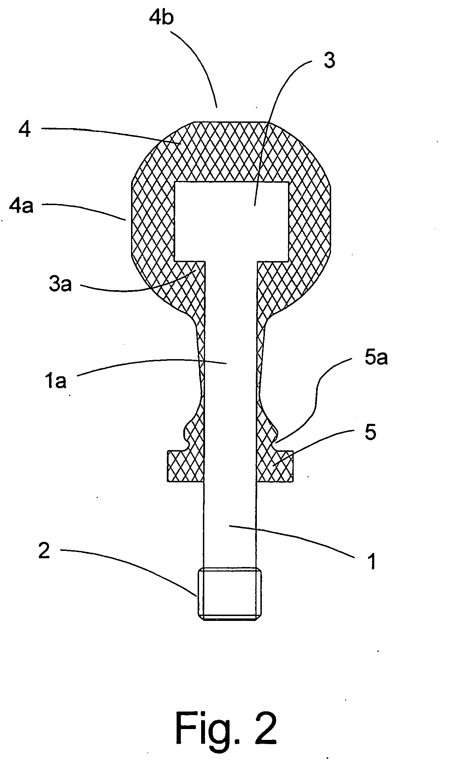

Die Fig. 2 zeigt eine zweite Ausführungsform eines Kugelzapfens, welcher prinzipiell identisch ist mit dem in Fig. 1 dargestellten Kugelzapfen. Der Kugelzapfen gemäß der Fig. 2 unterscheidet sich lediglich dadurch vom Kugelzapfen der Fig. 1, dass die Stirnseite 4b der Gelenkkugel 4 sowie deren Äquatorbereich 4a abgeflacht sind, wodurch die Reibkräfte des Kugelgelenks verringert werden und zudem der Anspritzpunkt sowie durch die Werkzeugtrennung bedingte Grate nicht mit der Gelenkpfanne in Verbindung kommen, weil diese in den Bereichen der Abflachungen angeordnet werden können.

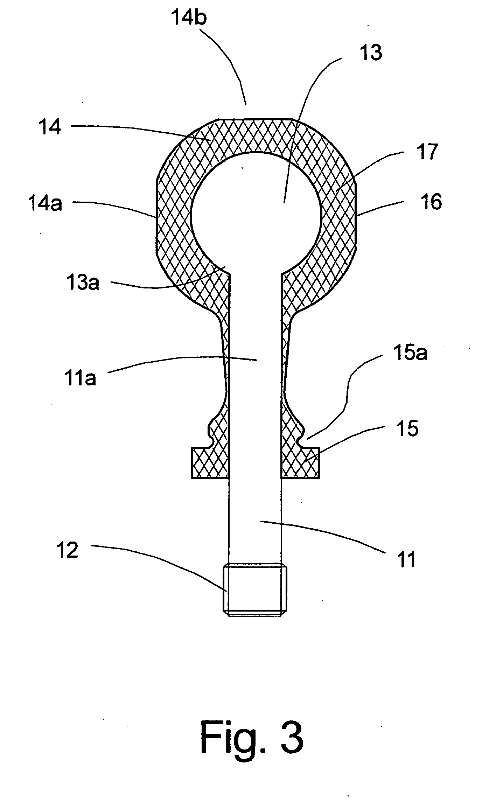

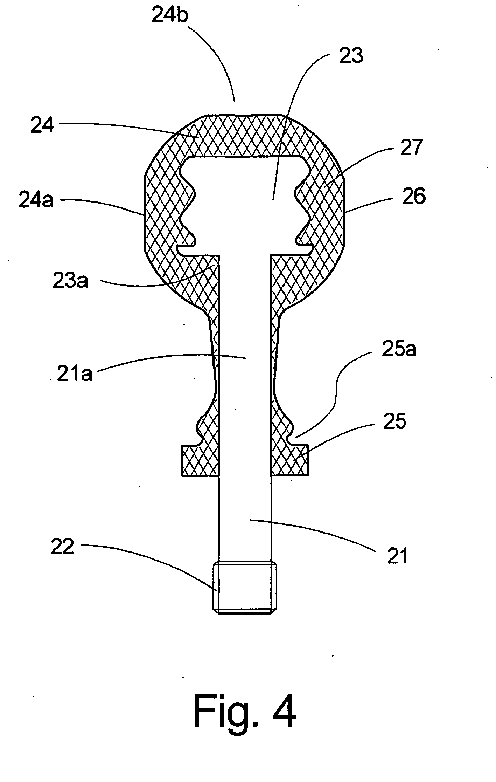

Die Figuren 3 und 4 zeigen zwei weitere mögliche Ausführungsformen des erfindungsgemäß hergestellten Kugelzapfens, wobei für die Kugelzapfen der Figuren 3 und 4 ein zwei- beziehungsweise dreischichtiger Kunststoff zur Bildung der Gelenkkugel sowie der Halterung für den Dichtungsbalg Verwendung findet. Der Kugelzapfen gemäß der Fig. 3 weist einen Zapfen 11 mit daran angeformtem Gewinde 12 sowie einem kugelförmig verdickten Bereich 13 auf, welcher den Kern der angespritzten Gelenkkugel 14 bildet. Die Gelenkkugel 14 hat eine abgeflachte Stirnseite 14b sowie einen abgeflachten Äquatorbereich 14a. Die Gelenkkugel 14 ist aus einem zwei- beziehungsweise dreischichtigen Kunststoff hergestellt, wobei der innere Kern 17 aus einem ersten Kunststoff, insbesondere einem faserverstärkten Kunststoff besteht, welcher von einer zweiten Kunststoffschicht 16 ummantelt ist. Die Mantelschicht 16 ist nicht aus einem faserverstärkten Kunststoff, damit dieser Kunststoff eine gute Gleiteigenschaft aufweist. Der zweischichtige Kunststoff wird ebenfalls für die Halterung 15,15a verwendet. Es ist jedoch auch vorstellbar, dass die Halterung lediglich aus einem einschichtigen Kunststoff besteht. Die Ausführungsform gemäß der Fig. 4 unterscheidet sich von derjenigen der Fig. 3 lediglich dadurch, dass der am Zapfen 21 angeformte Bereich 23 nicht kugelförmig ist, sondern eine zylindrische Form mit gewählter Mantelfläche aufweist. Der äußere Mantel 26 kann ebenfalls an dem Zapfen 21 anliegen, wobei auch drei Schichten "Mantel-Kem-Mantel" ausgebildet sein können. Diese Sandwich-Struktur läßt sich dadurch erzielen, in dem zuerst die den Mantel 26 bildende Schmelze in die Kavität des Spritzgußwerkzeuges eingespritzt wird. Anschließend wird die zweite, den Kern bildende Schmelze in die Kavität gespritzt. Es ist selbstverständlich möglich, weitere Schichten vorzusehen.

Prinzipiell ist jede Form für den Bereich, welcher den inneren Kern der Gelenkkugel des Kugelzapfens bildet, denkbar. Es ist jedoch darauf zu achten, dass der Zapfen mit angeformtem Gewinde und verbreitertem Bereich zur Bildung des inneren Kerns der Gelenkkugel möglichst einfach in der Herstellung und somit kostengünstig zu fertigen ist. Es ist selbstverständlich, dass der Zapfen je nach Anwendungsfall eine beliebig anders ausgestaltete Form aufweisen kann.

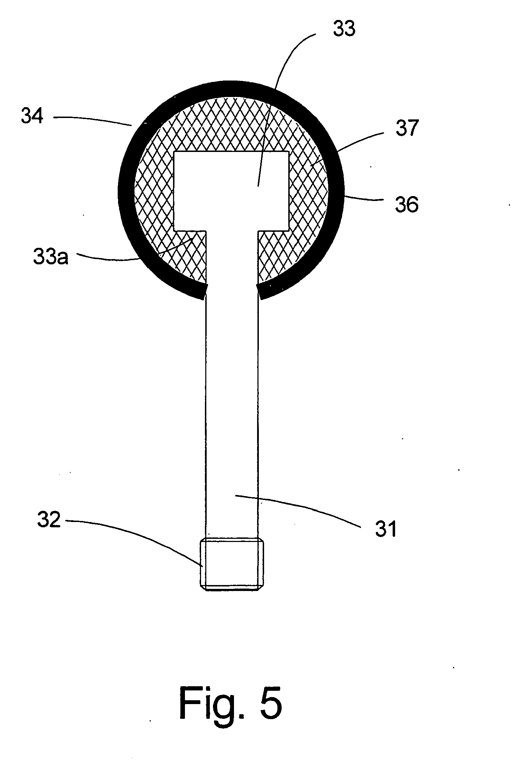

Die Fig. 5 zeigt einen erfindungsgemäß hergestellten Kugelzapfen mit einem Zapfen 31, welcher ein Gewinde 32 an seinem ersten freien Ende und an seinem zweiten Ende einen verbreiterten zylindrischen Bereich 33 aufweist, welcher den inneren Kern der Gelenkkugel 34 bildet. Dieser Kugelzapfen weist keine angeformte Halterung für die Befestigung eines Dichtungsbalgs auf. Die Gelenkkugel ist aus einem zweischichtigen Kunststoff, wobei der innere Kern 37 durch einen insbesondere faserverstärkten Kunststoff gebildet und die Mantelfläche 36 aus einem zweiten Kunststoff besteht.

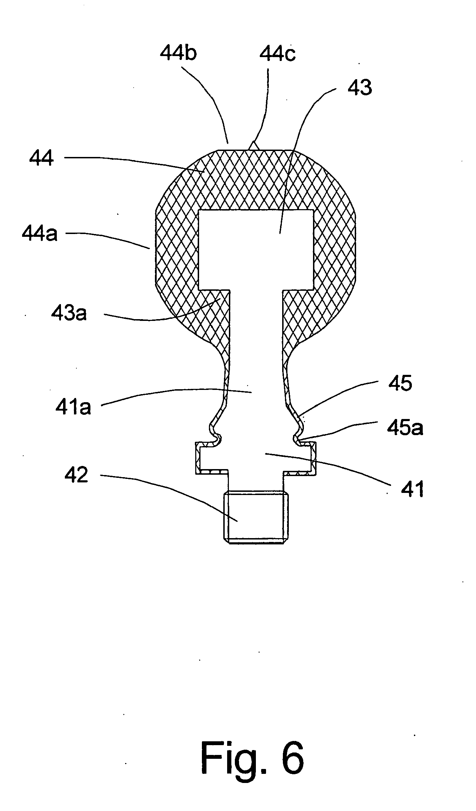

Die Fig. 6 zeigt eine weitere mögliche Ausführungsform des erfindungsgemäß hergestellten Kugelzapfens, wobei der Zapfen 41 einen Bereich 41a aufweist, der als Halterung für einen nicht dargestellten Dichtungsbalg ausgeformt ist. Dieser Bereich 41 a kann ebenfalls vom Kunststoff 45, 45a umspritzt sein, so dass auch dieser Bereich vor Korrosion geschützt ist.

Die für die beiden Kunststoffschichten verwendeten Materialien können sich zum Beispiel nur dadurch voneinander unterscheiden, dass der innere Kern im Gegensatz zum Mantelmaterial Fasern zur Verstärkung aufweist.

### Bezugszeichenliste

- 1: Zapfen
- 1a: Bereich
- 2: Gewinde
- 3: Bereich
- 3a: Hinterschneidung
- 4: Gelenkkugel
- 4a: Äquatorbereich
- 4b: Stirnseite
- 5: Halterung
- 5a: Rücksprung
- 11: Zapfen
- 12: Gewinde
- 13: Bereich
- 14: Gelenkkugel
- 14a: Äquatorbereich
- 14b: Stirnseite
- 15: Halterung
- 15a: Halterung
- 16: Kunststoffschicht (Mantel)
- 17: Kern
- 21: Zapfen
- 23: Bereich
- 24: Gelenkkugel
- 25: Halterung
- 25a: Halterung
- 26: Kunststoffschicht (Mantel)
- 27: Kern
- 31: Zapfen
- 32: Gewinde
- 33: Bereich
- 34: Gelenkkugel
- 36: Mantelfläche
- 37: Kern
- 41: Zapfen
- 41a: Bereich (Ausformung)
- 45: Kunststoff
- 45a: Kunststoff
- 54: Kunststoff
- 54a: Kunststoff

## Patentansprüche

1. Verfahren zur Herstellung eines Kugelzapfens, dessen Gelenkzapfen (1, 11, 21, 31) aus einem metallischen Material und dessen Gelenkkugel (4, 14, 24, 34) ein angeformtes Kunststoffspritzteil ist, **dadurch gekennzeichnet, dass** die Kunststoffschmelze vor dem Einspritzen in das Spritzgußwerkzeug mit einem Gas beziehungsweise Treibmittel unter hohem Druck versetzt wird, wobei der Druck größer ist, als der im Werkzeug während des Abkühlvorgangs vorhandene Druck.

2. Verfahren nach Anspruch 1, **dadurch gekennzeichnet, dass** in einem ersten Herstellungsschritt eine erste Kunststoffschmelze in das Spritzgußwerkzeug gebracht wird, welche den Mantel der Gelenkkugel bildet, und dass in einem nachfolgenden Herstellungsschritt eine zweite Kunststoffschmelze in das Spritzgußwerkzeug eingebracht wird, welche den Kern der Gelenkkugel bildet.

3. Verfahren nach Anspruch 2, **dadurch gekennzeichnet, dass** die den Kern bildende Kunststoffschmelze mit einem Treibmittel zum Ausgleich des Verzuges und Einfallstellen versetzt ist.

4. Verfahren nach einem der vorherigen Ansprüche, **dadurch gekennzeichnet, dass** mit der Gelenkkugel (4, 14, 24) die Haltevorrichtung für den Dichtungsbalg in einem Arbeitsschritt gespritzt wird.

## Claims

1. Method for producing a ball pin whose joint pin (1, 11, 21, 31) is made of a metallic material and whose joint ball (4, 14, 24, 34) is a formed-on plastics injection-moulded part, **characterised in that** the plastics melt is mixed with a gas or propellant under high pressure before being injected into the injection mould, wherein the pressure is higher than the pressure prevailing in the mould during the cooling process.

2. Method according to Claim 1, **characterised in that** a first plastics melt, which forms the surface of the joint ball, is introduced into the injection mould in a first production step, and that a second plastics melt, which forms the core of the joint ball, is introduced into the injection mould in a following production step.

3. Method according to Claim 2, **characterised in that** the plastics melt which forms the core is mixed with a propellant for compensating for the distortion and sink marks.

4. Method according to any one of the preceding Claims, **characterised in that** the holding device for the sealing bellows is injection-moulded with the joint ball (4, 14, 24) in one working step.

## Revendications

1. Procédé de fabrication d'un pivot sphérique avec rotule, dont le tourillon d'articulation (1, 11, 21, 31) est formé d'un matériau métallique et dont la rotule (4, 14, 24, 34) est une pièce moulée par injection, reliée à celui-ci d'un seul tenant, **caractérisé en ce que** la masse fondue de matière synthétique avant l'injection dans l'outil de moulage par injection est placé sous haute pression avec un gaz, ou plutôt un agent d'expansion, la pression étant supérieure à la pression existant dans l'outil pendant le processus de refroidissement.

2. Procédé selon la revendication 1, **caractérisé en ce que**, en une première étape de fabrication, une première masse fondue de matière synthétique est placée dans l'outil de moulage par injection qui forme l'enveloppe de la rotule, et **en ce qu'**en une étape de fabrication suivante, une deuxième masse fondue de matière synthétique formant le noyau de la rotule, est introduite dans l'outil de moulage par injection.

3. Procédé selon la revendication 2, **caractérisé en ce que** la masse fondue de matière synthétique formant le noyau est mélangée à un agent d'expansion, pour obtenir la compensation de la contraction et des affaissements.

4. Procédé selon l'une des revendications précédentes, **caractérisé en ce que**, avec la rotule (4, 14, 24), on injecte en une étape opératoire le dispositif de maintien prévu pour le soufflet d'étanchéité.
